# EUROPÄISCHE PATENTANMELDUNG

(11) **EP 1 415 793 A1**
(43) Veröffentlichungstag der Anmeldung: **06.05.2004**
(21) Anmeldenummer: 02405945.3
(22) Anmeldetag: 04.11.2002
(51) Int. Cl.: B29C 67/24, B29C 70/48

(54) **Verfahren zur Herstellung von Bauteilen aus Faserverbundkunststoffen**

(71) Anmelder: Alcan Technology & Management Ltd., 8212 Neuhausen am Rheinfall (CH)
(72) Erfinder: Sala, Robert, 8200 Schaffhausen (CH); Henne, Markus, 8200 Schaffhausen (CH)

(57) **Zusammenfassung**

Die Erfindung betrifft Verfahren zur Herstellung von faserverstärkten Kunststoffbauteilen, wobei aus einem Ausgangsmaterial (11) eine reaktive Schmelzmasse aufbereitet wird, welche in eine mit einem Fasergebilde beschickte Kavität eines Formwerkzeugs (3) injiziert wird, wobei die reaktive Schmelzmasse mit dem Fasergebilde mittels Polyreaktion in ein faserverstärktes Kunststoffbauteil überführt wird. Die Erfindung kennzeichnet sich dadurch aus, dass das Ausgangsmaterial (11) in einer beheizten Plastifiziereinheit (1) mit Schneckensystem (10) zu einer schmelzflüssigen, reaktiven Schmelzmasse aufbereitet und homogenisiert wird und die reaktive Schmelzmasse mittels Schneckensystem aus der Plastifiziereinheit (1) gefördert und direkt oder indirekt in die Kavität des Formwerkzeugs (3) injiziert wird.

## Beschreibung

Vorliegende Erfindung betrifft ein Verfahren zur Herstellung von faserverstärkten Kunststoffbauteilen, wobei aus einem Ausgangsmaterial ein fliessfähiges, reaktives Ausgangsgemisch aufbereitet wird, welches in eine mit einem Fasergebilde beschickte Kavität eines Formwerkzeugs injiziert wird, wobei das reaktive Ausgangsgemisch mit dem Fasergebilde mittels Polyreaktion in ein faserverstärktes Kunststoffbauteil überführt wird. Die Erfindung betrifft ferner eine Vorrichtung zur Durchführung des Verfahrens sowie die Verwendung der faserverstärkten Kunststoffbauteile.

Faserverstärkte Kunststoffbauteile, nachfolgend auch Faserverbundbauteile genannt, erlangen wegen ihres verhältnismässig geringen Gewichts und ihrer, durch das Einbringen von Fasern begründeten hohen Festigkeit insbesondere im Leichtbau einen immer höheren Stellenwert. Faserverbundbauteile kommen ferner zunehmend als strukturell tragende Bauteile in verschiedensten Anwendungsgebieten zum Einsatz, wobei solche Bauteile vielfach äusserst komplexe dreidimensionale, geometrische Formen aufweisen.

Die besagten Faserverbundbauteile beinhalten in der Regel Faserstrukturen, welche in Form textiler Flächengebilde vorliegen. Die Herstellung solcher Faserverbundbauteile erfolgt häufig nach folgendem Prinzip: Fasergebilde aus Verstärkungsfasern werden in die Kavität eines Formwerkzeugs gelegt. In das geschlossene Formwerkzeug wird anschliessend ein die Faserstruktur umströmendes und diese imprägnierendes, reaktives Ausgangsgemisch injiziert. Nach Abschluss der Formfüllung wird das Ausgangsgemisch zu einer Kunststoffmatrix ausgehärtet. Das fertige Faserverbundbauteil wird anschliessend aus dem Formwerkzeug entformt.

Die Kunststoffmatrix kann aus einem Duroplast oder einem Thermoplast sein. In beiden Fällen wird ein mit einem Aktivator vermengtes Ausgangsmaterial in ein niedrig viskoses bzw. fliessfähiges, reaktives Ausgangsgemisch überführt. Die Ausgangsmaterialien werden üblicherweise in einem Mischbehälter zusammengeführt. Das Injizieren des reaktiven Ausgangsgemischs aus dem Mischbehälter in das Formwerkzeug geschieht mittels Pumpen, wie Kolben- oder Rotationspumpen. Der Mischbehälter kann beispielsweise eine Mischkammer des Mischkopfes einer Injektionsanlage sein. Wird das Ausgangsmaterial von Hand gemischt, so kann der Mischbehälter auch in der Ausführung eines Drucktopfes vorliegen.

Ein bekanntes Herstellungsverfahren ist das sogenannte Harz-Fliessform-Verfahren, auch Resin-Transfer-Molding-Verfahren (RTM-Verfahren) genannt, wie es z.B. in "Kötte, 'Der Resin-Transfer-Molding-Prozess', Verlag TÜV Rheinland, 1991, S. 3-16" beschrieben ist.

Im RTM-Verfahren wird die Kavität eines geöffneten, mehrteiligen Formwerkzeugs mit Verstärkungsfasern, insbesondere mit Fasergebilden, und fallweise weiteren Komponenten beschickt. In die Formwerkzeugkavität des geschlossenen Formwerkzeugs wird in einem nachfolgenden Schritt ein niedrig viskoses Reaktionsharz unter Ausbildung einer Faserverbund-Formmasse injiziert. In einem abschliessenden Schritt wird die Faserverbund-Formmasse zur Aushärtung gebracht, wobei das Ausgangsgemisch in eine Kunststoffmatrix überführt wird. Das formstabile Faserverbundbauteil wird anschliessend entformt.

Das RTM-Verfahren ermöglicht die serienmässige Herstellung von Faserverbundbauteilen mit komplexen, dreidimensionalen Geometrien.

Im RTM-Verfahren werden mittlerweile neben duroplastischen Harzen auch thermoplastische Kunststoffe verarbeitet, weswegen der Ausdruck RTM-Verfahren in den nachfolgenden Ausführungen als Bezeichnung für das oben umschriebene Verfahren unabhängig des verwendeten Polymer-Systems steht.

Seit einiger Zeit hat das Interesse an der Herstellung von Faserverbundbauteilen mit thermoplastischen Matrixsystemen mittels RTM-Verfahren stark an Bedeutung zugenommen. So ist beispielsweise bekannt, Poly(butylenterephthalat)-(PBT)- oder Polyamid-(PA)-Polymersysteme mittels RTM-Verfahren zu Faserverbundbauteilen zu verarbeiten.

Die Herstellung von Faserverbundbauteilen mittels RTM-Verfahren ist jedoch nachwievor recht aufwendig. Dies betrifft insbesondere auch die Zubereitung eines reaktionsfähigen, fliessfähigen Ausgangsgemischs und dessen Injizieren in die Kavität des Formwerkzeugs.

Aufgabe vorliegender Erfindung ist es daher, ein vereinfachtes Verfahren und Vorrichtung zur Aufbereitung eines reaktiven Ausgangsgemischs aus einem Ausgangsmaterial und Injizieren desselben in die Kavität eines Formwerkzeugs vorzuschlagen.

Erfindungsgemäss wird die Aufgabe dadurch gelöst, dass das Ausgangsmaterial in einer Plastifiziereinheit mit Schneckensystem unter Energiezufuhr zu einem fliessfähigen reaktiven Ausgangsgemisch aufbereitet und homogenisiert wird, und das Ausgangsgemisch direkt oder indirekt in die Kavität des Formwerkzeugs injiziert wird.

Unter fliessfähigem, reaktivem Ausgangsgemisch ist hierbei das nicht-reagierte Ausgangsmaterial in flüssig bis pastösem Zustand zu verstehen. Das Ausgangsmaterial wird hierbei unter Energiezufuhr, insbesondere unter Wärmezufuhr, in den fliessfähigen bzw. einen schmelzflüssigen Zustand überführt. Unter Kunststoffmatrix ist ferner das durch Polyreaktion des Ausgangsgemischs hervorgegangene Polymer zu verstehen.

Der Begriff Plastifizieren bedeuted im Zusammenhang mit Plastifiziereinheit das Überführen, insbesondere das Aufschmelzen, und Homogenisieren von nichtreagiertem, insbesondere als Trockenfeststoff voliegenden, Ausgangsmaterial in ein fliessfähiges, reaktives Ausgangsgemisch. Die Plastifiziereinheit ist in dem Sinne eine Mischvorrichtung.

Der Begriff Prepolymer soll hier die Sammelbezeichnung für z.B. oligomere oder teilweise auch selbst bereits polymere Verbindungen sein, die als Vor- oder Zwischenprodukte, d.h. als Ausgangsmaterialien, zur Herstellung von duroplastischen oder thermoplastischen Kunststoffen eingesetzt werden.

Unter Polyreaktion ist hier die reaktive Umsetzung von Ausgangsstoffen in Form von z.B. Monomeren oder Prepolymeren bzw. Oligomeren zu thermo- oder duroplastischen Polymeren zu verstehen. Der Oberbegriff Polyreaktion umfasst z.B. auch die Polymerisation.

Das erfindungsgemässe Herstellungsverfahren ist bevorzugt ein RTM-Verfahren oder eine Variation des RTM-Verfahrens, wie z.B. ein TERTM (Thermal-Expanded-Resin-Transfer-Molding) Verfahren oder ein VARTM (Vacuum-Assisted-Resin-Transfer-Molding) Verfahren.

Das Herstellungsverfahren kann jedoch beispielsweise auch Gegenstand eines reinen Vakuuminjektionsverfahrens (z.B. VARI = "Vacuum Assisted Resin Infusion") sein, bei welchem das reaktive Ausgangsgemisch alleine durch das angelegte Vakuum und ohne Druckunterstützung durch die Fasern fliesst.

Die angesetzten Fliessgeschwindigkeiten des reaktiven Ausgangsgemischs in der Kavität sollen hier nicht Gegenstand der Erfindung sein, so dass es durchaus möglich ist, dass das erfindungsgemässe Herstellungsverfahren aufgrund der genannten Fliessgeschwindigkeiten einem RIM (Reaction-Injection-Molding) bzw. S-RIM (Structural-Reaction-Injection-Molding) Verfahren näher steht.

Zur Aufbereitung des fliessfähigen, reaktiven Ausgangsgemischs wird über eine mit der Plastifiziereinheit zusammenwirkenden Einfülleinheit ein Ausgangsmaterial zugeführt, welches in der Plastifiziereinheit unter Energiezufuhr, vorzugsweise unter Erwärmung, in ein fliessfähiges Ausgangsgemisch überführt und mittels Schnekkensystem homogenisiert (innig vermischt) wird. Das fliessfähige Ausgangsgemisch kann bezüglich Viskosität flüssig bis pastös sein. Das Ausgangsmaterial kann z.B. erweicht bzw. teilweise oder vollständig aufgeschmolzen werden.

Die Plastifiziereinheit enthält zweckmässig Energiezufuhr-Mittel. Die zugeführte Energie kann je nach Eigenschaften des Ausgangsmaterials elektromagnetische Strahlung, wie Mikrowellen, Infrarot, UV-Strahlung oder Wärmestrahlung umfassen. Die Energiezufuhr kann ferner auch mittels Wärmeleitung geschehen.

In bevorzugter Ausführung ist die Plastifiziereinheit zum Aufschmelzen des Ausgangsmaterials und zum Halten einer erhöhten Temperatur beheizbar und mit entsprechenden Mitteln zu deren Beheizung ausgestattet. In besonders bevorzugter Ausführung der Erfindung ist das Schneckensystem in einem beheizbaren Zylinder angeordnet. Ferner kann die Plastifiziereinheit mit einer Wärmeisolation versehen sein.

Überdies können auch die nachfolgend beschriebenen Leitungen, wie Förder- oder Injektionsleitungen, bzw. die Transfereinheit oder Teile davon, wie z.B. das Reservoir oder die Pumpeneinheit, Energiezufuhr-Mittel, wie oben beschrieben, enthalten. Die Energiezufuhr-Mittel dienen hier bevorzugt der weiteren Herabsetzung und/oder der Kontrolle bzw. Aufrechterhaltung der Viskosität des Ausgangsgemischs. In bevorzugter Ausführung dienen die Energiezufuhr-Mittel der Erwärmung bzw. der Temperaturkontrolle des Ausgangsgemischs in den Leitungen bzw. in der Transfereinheit. Die Leitungen bzw. Transfereinheit enthalten hierzu bevorzugt Mittel zu deren Beheizung. Die Leitungen bzw. die Transfereinheit können ferner mit einer Wärmeisolation versehen sein.

Es ist möglich, dass mehrere, parallel arbeitende Plastifizierheiten für die Aufbereitung des Ausgangsgemischs besorgt sind. Das Schneckensystem einer Plastifiziereinheit kann ferner eine oder mehrere, beispielsweise ineinandergreifende, Misch- und Förderschnecken umfassen. Das Schneckensystem dient der Durchmischung und Homogenisierung des Ausgangsmaterials bzw. des Ausgangsgemischs. Ferner dient das Schneckensystem bevorzugt der Förderung des Ausgangsgemischs aus der Plastifiziereinheit.

Zwischen der oder den Plastifiziereinheiten und dem Formwerkzeug ist wie oben erwähnt zweckmässig eine Transfereinheit angeordnet, welche wenigstens Leitungen, wie Förderleitungen bzw. Injektionsleitungen beinhaltet, die die Plastifiziereinheit mit den Injektionspunkten des Formwerkzeugs verbinden. Die Injektionsleitungen können auch innerhalb des Formwerkzeugs selbst, z.B. als in die Kavität mündende Injektionskanäle, verlaufen.

Die Transfereinheit kann ferner fallweise weitere Komponenten enthalten:
- ein Reservoir zur temporären Aufnahme von fliessfähigem Ausgangsgemisch;
- eine mit der oder den Injektionsleitungen zusammenwirkende Pumpeneinheit zwecks Erzeugung eines Injektionsdrucks;
- Armaturen zur Steuerung des Materialflusses in den Förder- bzw. Injektionsleitungen;
- Mittel zur elektronische Steuerung des Materialflusses zwischen der Plastifiziereinheit und dem Formwerkzeug und des Formfüllvorganges.

Ferner kann auch die Transfereinheit selbst oder Teile davon als integraler Bestandteil innerhalb des Formwerkzeugs angeordnet sein.

Die Armaturen können z.B. Ventile, wie Einlass- bzw. Auslassventile, Klappen oder Schieber sein, welche gegebenenfalls Sensor-gesteuert sind.

Das Ausgangsmaterial liegt bevorzugt als trockenes, vorzugsweise pulver-, granulat-, kugel- oder flockenförmiges Ausgangsmaterial vor. Das Ausgangsmaterial kann ferner ein Gemisch aus mehreren Ausgangsstoffen enthalten.

Das Ausgangsmaterial enthält vorzugsweise Prepolymere, insbesondere Oligomere, oder Monomere oder ein Gemisch davon. Ferner enthält das Ausgangsmaterial einen bei Raumtemperatur festen oder flüssigen Aktivator, zur Auslösung und/oder Beschleunigung der Polyreaktion. In besonders bevorzugter Ausführung ist der Aktivator bereits dem Ausgangsmaterial in entsprechender Dosierung und Verteilung beigemischt. Es ist auch möglich, dass der Aktivator z.B. in flüssiger Form durch eine separate Zufuhreinrichtung dosiert in die Plastifiziereinheit gespiesen oder im Anschluss an die Plastifiziereinheit dem Ausgangsgemisch beigemischt wird.

Unter Aktivator ist hierbei eine, in der Regel in geringen Mengen eingesetzte, Substanz zu verstehen, mittels welcher die Polyreaktion in Gang gesetzt und/oder beschleunigt wird. Der Begriff Aktivator umfasst hierbei auch Beschleuniger und Katalysatoren, bzw. Beschleunigungskatalysatoren.

Das Ausgangsmaterial kann ferner noch weitere Zusatzkomponenten enthalten, wie z.B. Füllmaterial, Pigmente (Farbstoffe), Antioxidantien, Stabilisatoren, Weichmacher oder Flammhemmer.

Die Plastifiziereinheit kann in spezifischer Ausführung der Erfindung Teil eines Extruder- oder eines Spritzgiesssystems sein, wobei das Ausgangsgemisch direkt über entsprechende Leitungen oder indirekt über eine Transfervorrichtung mit Reservoir aus der Plastifiziereinheit in die Werkzeugform gefördert wird.

In einer ersten Ausführung der Erfindung ist die genannte Plastifiziereinheit Teil eines Extrudersystems. Das fliessfähige, reaktive Ausgangsgemisch wird mittels eines Schneckensystems aufbereitet und über wenigstens eine Förderleitung kontinuierlich aus der Plastifiziereinheit in das Reservoir einer Transfereinheit gefördert. Das Extrudersystem kann z.B. ein Einschneckenextruder oder Doppelschnekkenextruder sein. Der Förderdruck wird hierbei bevorzugt durch das Schneckensystem selbst erzeugt.

Das Ausgangsgemisch wird weiters mittels Pumpeneinheit über eine oder mehrere Injektionsleitungen aus dem Reservoir in die Kavität des Formwerkzeugs injiziert. Es kann vorgesehen sein, dass die Förderung des Ausgangsgemischs aus der Extrudervorrichtung innerhalb eines Produktionszykluses temporär unterbrochen wird, wobei das Ausgangsgemisch bis zur Wiederaufnahme der Förderung bevorzugt in einem fliessfähigen Zustand gehalten wird.

Das Reservoir kann über eine oder mehrere Förderleitungen von einer oder mehreren Plastifiziereinheiten mit dem Ausgangsgemisch gespiesen werden.

Die Transfereinheit enthält bevorzugt Mittel zur elektronischen Steuerung der Zufuhr von reaktivem Ausgangsgemisch in das Formwerkzeug in Abhängigkeit des im Reservoir oder an den Injektionspunkten herrschenden Druckes. Dadurch lässt sich die Zufuhr von Ausgangsgemisch in das Formwerkzeug für jede Injektionsleitung in Abhängigkeit spezifischer Prozessparamter gezielt regulieren. Ferner lässt sich der Materialzufluss über die einzelnen Injektionsleitungen zu Beginn, während und bei Abschluss des Formfüllvorganges präzise steuern. Die in das Formwerkzeug führenden Injektionsleitungen, enthalten hierzu bevorzugt elektronisch steuerbare Armaturen.

In einer zweiten Ausführung der Erfindung ist die Plastifiziereinheit Teil einer Spritzgiessvorrichtung. Das dazughörige Spritzgiessverfahren ist ein diskontinuierliches bzw. semi-kontinuierliches Verfahren, welches sich von der vorgenannten Extrusionsvorrichtung unter anderem dadurch unterscheidet, dass das Ausgangsgemisch mittels Schneckensystem aufbereitet, homogenisiert und einem vor der Schneckenspitze angeordneten Dosierraum zugeführt wird. Der Dosierraum kann eine der Schnecke vorgelagerte Vorkammer oder ein durch ein Zurückfahren der Schnecke ausgebildeter Schneckenvorraum sein. Das dosierte Ausgangsgemisch wird nachfolgend direkt über Leitungen oder indirekt über eine Transfervorrichtung mit Reservoir in die Kavität des Formwerkzeugs injiziert. Der Injektionsdruck wird vorzugsweise durch einen auf das im Dosierraum akkumulierte Ausgangsgemisch wirkenden Kolben erzeugt. Die Schnecke kann hierbei selbst als Kolben wirken, indem sie sich axial nach vorne in Richtung Dosierraum bewegt und einen Injektionsdruck erzeugt.

In sämtliche Ausführungen der Erfindung kann vorgesehen sein, dass das in der Plastifiziereinheit aufbereitete Ausgangsgemisch eine höhere Viskosität aufweist als das in die Werkzeugform injizierte Ausgangsgemisch. Das Ausgangsgemisch kann z.B. in flüssig bis pastöser Konsistenz bzw. erweichtem Zustand aus der Plastifiziereinheit ausgegeben werden bzw. vom Schneckensystem zur Austrittsöffnung der Plastifiziereinheit befördert werden. Die Viskosität des Ausgangsgemisch wird bei oder nach dem Austritt aus der Plastifiziereinheit unter Energiezufuhr, insbesondere unter Erwärmung, erniedrigt, so dass das Ausgangsgemisch als niedrig viskose Flüssigkeit bzw. Schmelzmasse in das Formwerkzeug injiziert werden kann. Die Herabsetzung der Viskosität kann bsp. an der Austrittsöffnung bzw. Austrittsdüse der Plastifiziereinheit, in den Leitungen, insbesondere in den Förderund/oder Injektionsleitungen, in bestimmten Teilen der Transfereinheit, wie z.B. im Reservoir oder in der Pumpeneinheit, geschehen. Ferner kann die Herabsetzung der Viskosität auch erst kurz vor Eintritt in das Formwerkzeug oder im Formwerkzeug selbst vor Eintritt in die Kavität erfolgen. Es versteht sich von selbst, dass die Viskosität des Ausgangsgemischs beim Durchlaufen der einzelnen der Plastifiziereinheit nachgeordneten und oben genannten Vorrichtungselementen bis zum Erreichen der Kavität kontinuierlich oder gestuft auf einen bestimmten Wert herabgesetzt werden kann.

Da die genannte Herabsetzung der Viskosität entsprechende Änderungen der Druckverhältnisse innerhalb des Systems bewirkt, können Mittel zur Steuerung und Kontrolle der Druckverhältnisse innerhalb der Plastifiziereinheit, der Leitungen und weiteren Teilen der Transfereinheit vorgesehen sein. Die genannten Mittel können insbesondere Armaturen zur Steuerung des Materialflusses an verschiedenen Stellen umfassen.

In bevorzugter Ausführung der Erfindung wird das Formwerkzeug auf einer anderen Verfahrenstemperatur gehalten als die Plastifiziereinheit und gegebenenfalls die Transfereinheit. Dazu sind zwischen dem Formwerkzeug und der Plastifiziereinheit bzw. der Transfereinheit oder Teilen der Transfereinheit Mittel zur thermischen Entkopplung des Formwerkzeug von der Transfereinheit bzw. Teilen davon und/oder der Plastifiziereinheit vorgesehen. Die besagten Mittel sind bevorzugt an den Injektionsleitungen, insbesondere an den Armaturen der Injektionsleitungen, angeordnet.

In besonders bevorzugter Ausführung der Erfindung handelt es sich bei der Kunststoffmatrix des Faserverbundbauteils um einen thermoplastischen Kunststoff, wie Polyamid-12 (PA12) oder Polybutylenterephthalat (PBT).

Die dazugehörigen Ausgangsmaterialien enthalten bevorzugt Prepolymere, insbesondere Oligomere, oder Monomere.

In bevorzugter Ausführung der Erfindung werden thermoplastische Polymersysteme verwendet, deren Ausgangsmaterial eine tiefere Schmelztemperatur bzw. Erweichungstemperatur aufweist als die daraus polymerisierte Kunststoffmatrix und deren ideale Reaktionstemperatur über der Schmelz- bzw. Erweichungstemperatur des Ausgangsmaterials und unterhalb der Schmelztemperatur des Polymerproduktes (Kunststoffmatrix) liegt.

Unter idealer Reaktionstemperatur ist jene Temperatur zu verstehen, bei welcher die Reaktionsgeschwindigkeit und die Energiezufuhr zur Erreichung dieser Reaktionsgeschwindigkeit in einem optimierten Verhältnis zueinander stehen, d.h. bei welcher unter möglichst klein gehaltener Energiezufuhr eine möglichst hohe, für das Verfahren noch wirtschaftliche Reaktionsgeschwindigkeit erzielt wird.

Die Temperatur der Plastifiziereinheit liegt bevorzugt in der Nähe des Schmelzpunktes des Ausgangsmaterials (Edukt). Die Temperatur der Transfereinheit liegt bevorzugt über der Schmelztemperatur des Ausgangsmaterials, so dass das Ausgangsgemisch hier in einem niedrig viskosen, schmelzflüssigen Zustand vorliegt. Da die Reaktionsgeschwindigkeit temperaturabhängig ist, d.h. mit zunehmender Temperatur des Ausgangsgemischs zunimmt, sollte die Temperatur des Ausgangsgemischs in der Transfereinheit derart tief gehalten werden, dass eine möglichst niedrige Viskosität des Ausgangsgemisch bei möglichst tiefen Reaktionsgeschwindigkeiten erreicht wird. Ferner sollte das Ausgangsgemisch in einem Reservoir für eine bestimmte Zeit haltbar sein, ohne dass es frühzeitig zu einem Polymer ausreagiert.

Damit wird das frühzeitige Reagieren des als Schmelzmasse vorliegenden reaktiven Ausgangsgemischs, welches zu einer markanten Erhöhung der Viskosität führt, verhindert. Die Temperatur des Formwerkzeugs selbst liegt in der Nähe der idealen Reaktionstemperatur, so dass das Ausgangsgemisch nach Abschluss des Formfüllvorganges möglichst schnell ausreagiert und verfestigt. Dies bedingt jedoch, dass das Formwerkzeug, wie oben erwähnt, von der Transfereinheit bzw. von der Plastifiziereinheit thermisch entkoppelt ist.

Die aus dem Ausgangsgemisch hervorgehende Kunststoffmatrix des Faserverbundbauteils ist besonders bevorzugt ein Poly(butylenterephthalat) (PBT). Das Ausgangsmaterial zur Herstellung der PBT-Kunststoffmatrix, enthält beispielsweise zyklische Oligomere des CPBT, welche mit einem Katalysator, insbesondere einen Zink-Katalysator, vermengt sind. Besonders geeignete zyklische Oligomere werden unter dem Handelsnamen CBT™ von der Firma Cyclics angeboten. Die Wahl des Katalysators, welcher dem Prepolymer beigemischt wird, hängt von der angestrebten Reaktivität des Ausgangsgemischs ab. Die verschiedenen, verwendbaren (an dieser Stelle nicht näher beschriebenen) Katalysatoren decken ein breites Spektrum an Reaktivität ab, und deren Wahl hat letztendlich den entscheidenen Einfluss auf die Taktzeiten im Fertigungsprozess.

Das besagte Ausgangsmaterial kann ferner weitere entsprechend geeignete Zusatzstoffe, wie oben beschrieben, enthalten.

Das als Trockenfeststoff in die Plastifiziereinheit zugeführte Ausgangsmaterial aus oben genannten zyklischen Oligomeren wird bevorzugt auf eine Temperatur im Bereich der Schmelztemperatur erwärmt, angeschmolzen oder geschmolzen und homogenisiert. Das Ausgangsmaterial wird danach unter weiterer Energiezufuhr (z.B. Heizung) in ein niedrig viskoses, reaktives Ausgangsgemisch überführt.

Vor der Injektion in das Formwerkzeug wird das Ausgangsmaterial bevorzugt auf eine Temperatur von 160°C bis 180°C erwärmt. Die Viskosität der Schmelzmasse beträgt bei einer Temperatur der Kunststoffmasse von 160°C noch rund 150 mPa*s, während sie bei einer Temperatur von rund 180°C noch lediglich rund 17 mPa*s beträgt. Die Schmelzmasse wird bis zum Auslösen der Polyreaktion bzw. Polymerisation auf einer, vorzugsweisen konstanten, Temperatur im Bereich von 160 bis 190°C gehalten.

Die Schmelzmasse wird entweder direkt oder indirekt über eine Transfereinheit mit Reservoir über eine oder mehrere Injektionsleitungen in das beheizte Formwerkzeug injiziert. Im besagten Formwerkzeug wird die Schmelzmasse auf die ideale Reaktionstemperatur von rund 180 bis 200°C erwärmt, bei welcher die Schmelzmasse zu PBT polymerisiert. Da die PBT mit rund 225°C eine deutlich über der idealen Reaktionstemperatur liegende Schmelztemperatur aufweist, erstarrt die Kunststoffmatrix mit fortschreitender Polyreaktion zu einem Faserverbundbauteil.

Da die Temperatur des Formwerkzeugs im reaktiven Temperaturbereich der Schmelzmasse von rund 180 bis 200°C liegt und damit niedriger ist als die Schmelztemperatur der polymerisierten Kunststoffmatrix von rund 220 bis 230°C, kann das Formwerkzeug hier über sämtliche Produktionszyklen isotherm gehalten werden. Das heisst, es muss kein Temperaturzyklus gefahren werden.

Das Formwerkzeug ist zweckmässig ein schliessbares, mehrteiliges und vorzugsweise ein zweiteiliges Formwerkzeug mit wenigstens zwei, eine Kavität ausbildenden Formwerkzeugteilen bzw. -hälften.

Dem Formwerkzeug sind zweckmässig Mittel zum Beheizen und/oder Kühlen desselbigen zugeordnet. Die genannten Mittel können beispielsweise im Formwerkzeug geführte Heiz- und/oder Kühlleitungen umfassen.

Zur Ausführung des Verfahrens wird zu Beginn eines Produktionszykluses ein Fasergebilde in das Formwerkzeug eingelegt, welches als sogenanntes Beschicken des Formwerkzeug bezeichnet wird.

Das reaktive Ausgangsgemisch wird, wie oben ausführlich beschrieben, nachfolgend in Kavität des geschlossenen Formwerkzeugs injiziert, wobei das Ausgangsgemisch das Fasergebilde durchtränkt und umgibt. Nach Abschluss der Formfüllung wird das Ausgangsgemisch mittels Polyreaktion in eine Kunststoffmatrix überführt.

Bei Erreichen einer genügenden Verfestigung der Kunststoffmatrix wird das fertige Faserverbundbauteil entformt. Das Formwerkzeug wird anschliessend für einen neuen Produktionszyklus vorbereitet. Die Taktzeit für einen einzigen Zyklus hängt wie oben beschriebenen im Wesentlichen von der Injektionsgeschwindigkeit, der Geschwindigkeit der Polyreaktion und Kristallisation des Ausgangsgemischs ab, welche ihrerseits durch die Wahl des Aktivators bestimmt werden kann.

Die Fasergebilde können in Form von textilen Flächengebilden, z.B. Vliese, "Nonwovens", nicht-maschenbildenden Systemen, wie Gewebe, uni- oder bidirektionale Gelege, Geflechte oder Matten oder maschenbildenden Systemen, wie Gestricke oder Gewirke sowie als gestickte Strukturen vorliegen. Die verwendeten Fasern sind vorzugsweise Langfasern mit Faserlängen von z.B. 3-150 mm oder Endlosfasern. Das in das Formwerkzeug eingelegte Fasergebilde kann ferner ein- oder mehrteilig sein.

In bevorzugter Ausführung des Faserverbundbauteils werden textile Flächengebilde aus gerichteten Fasern und insbesondere textile Gewebe aus vorzugsweise Langfasern oder Endlosfasern verwendet.

Die Fasergebilde können beispielsweise als vorgeformte, der Kontur des Faserverbundbauteils bzw. der Werkzeugkavität angepasste Fasergebilde vorliegen. Ferner können die Fasergebilde mit einem Binder imprägniert sein. Der Binder verbessert den Zusammenhalt der Faserstruktur, erhöht die Umformbarkeit und die Formstabilität des Fasergebildes und dient der Verhinderung von Gaseinschlüssen zwischen den Fasern beim Injizieren des Ausgangsgemischs in das Formwerkzeug. Der Binder kann beispielsweise aus demselben Material wie die zu bildende Kunststoffmatrix bestehen.

Die Faserhalbzeuge können beispielsweise aus Glasfasern, Kohlenstofffasern, Aramidfasern oder Gemischen davon hergestellt sein. Weitere Faserntypen aus Kunststoff oder Naturfasern können ebenfalls Verwendung finden.

Vorliegende Erfindung weist den Vorteil auf, dass die Aufbereitung des Ausgangsgemischs mittels marktüblichen Plastifziereinheiten ausgeführt werden kann, wie sie beispielsweise in Extruder- oder Spritzgiessanlagen eingesetzt werden. Die genannten Plastifiziereinheiten müssen fallweise nur geringfügig modifiziert werden. Der Einsatz solcher Plastifiziereinheiten ist möglich, weil der Schmelzpunkt des Ausgangsgemischs bedeutend unterhalb dessen Polyreaktionstemperatur liegt. Dadurch kann das Ausgangsgemisch durch die Plastifiziereinheit geführt werden, ohne dass Polyreaktions- und Kristallistationsvorgänge einsetzen.

Mit dem erfindungsgemässen Herstellungsverfahren gefertigte faserverstärkte Kunststoffbauteile finden beispielsweise Verwendung in Strassen- und Schienenfahrzeugen, in der Luft- und Raumfahrt, im Schiffs- und Bootsbau, in der Bautechnik, insbesondere im Leichtbau, z.B. zur Verstärkung von Baukonstruktionen oder in Sportgeräten.

Die besonders bevorzugten Faserverbundbauteile mit einer thermoplastischen Kunststoffmatrix weisen gegenüber solchen aus einer duroplastischen Kunststoffmatrix entscheidende Vorteile auf. Bauteile mit thermoplastischer Kunststoffmatrix lassen sich beliebig miteinander oder mit anderen Bauteilen mittels thermoplastischem Schweissen oder thermoplastischem Kleben verbinden. Die besagten Bauteile lassen sich überdies durch Wiedererwärmen beliebig umformen und richten. Ferner ergeben sich gegenüber den bisherigen Epoxy-Harzsystemen Vorteile bezüglich Recycling und der Schlagzähigkeit.

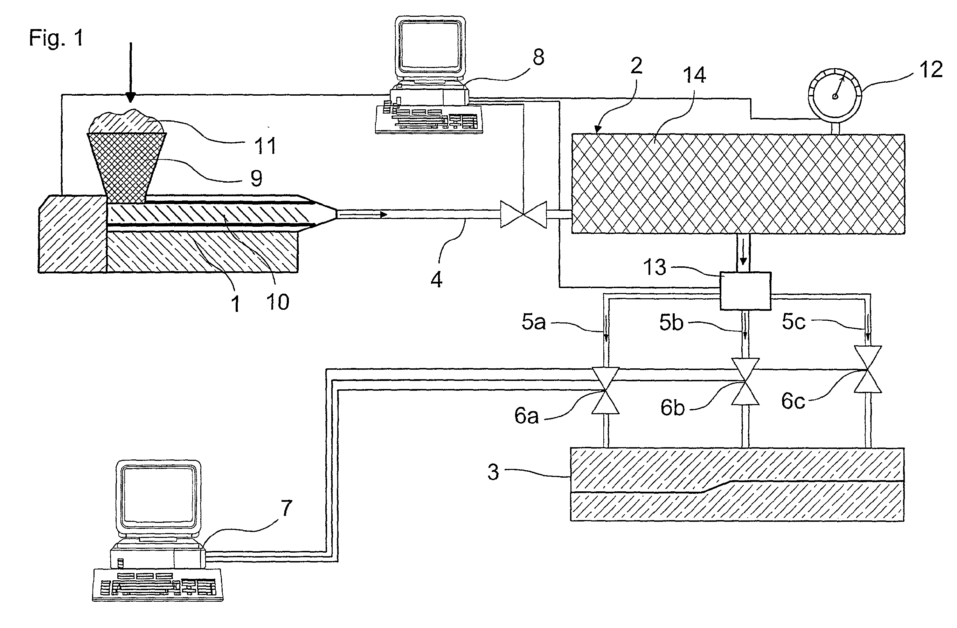

Im folgenden wird die Erfindung beispielhaft und mit Bezug auf die beiliegende Figur 1 näher erläutert. Fig. 1 zeigt einen schematischen Aufbau einer Ausführungsvariante der erfindungsgemässen Vorrichtung.

Einer Extrudervorrichtung 1 wird über eine Einfülleinheit 9 ein beispielsweise granulat- oder pulverförmiges Ausgangsmaterial 11 zugeführt. Das Ausgangsmaterial 11, welches ein Stoffgemisch aus mehreren Komponenten wie z.B. Oligomeren, Katalysatoren, Füllmaterial etc. sein kann, wird in der beheizten Extrudervorrichtung 1 zu einer fliessfähigen, reaktiven Schmelzmasse aufbereitet, die mittels wenigstens einer Extruderschnecke 10 homogenisiert und über Förderleitungen 4 in das Reservoir 14 einer Transfereinheit 2 gefördert wird. Der Förderdruck wird durch die Extruderschnecke 10 selbst erzeugt.

Vom Reservoir 14 wird die reaktive Schmelzmasse mittels einer Pumpeneinheit 13 über Injektionsleitungen 5a, 5b, 5c in die mit dem Fasergebilde beschickte Kavität eines Formwerkzeugs 3 injiziert. Bei der Verwendung von mehreren Injektionsleitungen 5a, 5b, 5c spricht man auch von einer sogenannten "Multi-Gate-Injektion". Der Materialfluss durch die Injektionsleitungen 5a, 5b, 5c wird durch Ventile 6a, 6b, 6c gesteuert. Die Ventile sowie die Pumpeneinheit 13 sind unter Einsatz von Computern 7 elektronisch gesteuert. Dank der Ventilsteuerung lässt sich der Materialzufluss über die einzelnen Injektionsleitungen zu Beginn, während und bei Abschluss des Formfüllvorganges präzise steuern.

Ferner wird auch die Fördermenge an reaktiver Schmelzmasse aus der Extrusionsvorrichtung in Abhängigkeit des im Reservoir 14 der Transfereinheit 2 herrschenden Druckes 12 mittels Computer 8 gesteuert.

## Patentansprüche

1. Verfahren zur Herstellung von faserverstärkten Kunststoffbauteilen, wobei aus einem Ausgangsmaterial (11) ein fliessfähiges, reaktives Ausgangsgemisch aufbereitet wird, welches in eine mit einem Fasergebilde beschickte Kavität eines Formwerkzeugs (3) injiziert wird, wobei das reaktive Ausgangsgemisch mit dem Fasergebilde mittels Polyreaktion in ein faserverstärktes Kunststoffbauteil überführt wird,
**dadurch gekennzeichnet, dass**
das Ausgangsmaterial (11) in einer Plastifiziereinheit (1) mit Schneckensystem (10) unter Energiezufuhr zu einem fliessfähigen, reaktiven Ausgangsgemisch aufbereitet und homogenisiert wird.

2. Verfahren nach Anspruch 1, wobei die Plastifiziereinheit (1) Teil einer Extrudervorrichtung ist, und das homogenisierte, reaktive Ausgangsgemisch mittels Schneckensystem (10) aus der Plastifiziereinheit (1) gefördert wird.

3. Verfahren nach Anspruch 2, wobei das Ausgangsgemisch über eine Förderleitung (4) aus der Plastifiziereinheit (1) in das Reservoir (14) einer Transfereinheit (2) gefördert und mittels Pumpeneinheit (13) über wenigstens eine Injektionsleitung (5) aus dem Reservoir (14) in die Kavität des Formwerkzeugs (3) injiziert wird.

4. Verfahren nach Anspruch 1, wobei die Plastifiziereinheit (1) Teil einer Spritzgiessvorrichtung ist, und das homogenisierte, reaktive Ausgangsgemisch mittels Schneckensystem (10) in einen, dem Schneckensystem vorgelagerten Dosierraum gefördert und mittels Kolben, vorzugsweise mittels eines als Kolben wirkenden Schneckensystems, aus dem Dosierraum der Plastifiziereinheit (1) gefördert wird.

5. Verfahren nach Anspruch 4, wobei das Ausgangsgemisch mittels Kolben aus dem Dosierraum der Plastifiziereinheit (1) über wenigstens eine Injektionsleitung (5) in die Kavität des Formwerkzeug (3) injiziert wird.

6. Verfahren nach Anspruch 6, wobei das Ausgangsgemisch über eine Förderleitung (4) aus der Plastifiziereinheit (1) in das Reservoir (14) einer Transfereinheit (2) gefördert und über wenigstens eine Injektionsleitung (5a, 5b, 5c) aus dem Reservoir (14) in die Kavität des Formwerkzeugs (3) injiziert wird.

7. Verfahren nach einem der Ansprüche 1 bis 6, wobei das Ausgangsgemisch in der Plastifiziereinheit (1) eine flüssige bis pastöse Konsistenz aufweist und die Viskosität des Ausgangsgemischs bei oder nach dem Austritt aus der Plastifiziereinheit (1) bis zum Eintritt in die Kavität des Formwerkzeugs unter Energiezufuhr, insbesondere unter Erwärmung, bis Erreichen einer flüssigen bis dünnflüssigen Konsistenz weiter herabgesetzt wird.

8. Verfahren nach einem der Ansprüche 1 bis 7, wobei der Injektionsvorgang des Ausgangsgemischs in das Formwerkzeug (3) mittels Armaturen (6a, 6b, 6c) elektronisch gesteuert wird.

9. Verfahren nach einem der Ansprüche 1 bis 8, wobei an den Injektionsleitungen (5a, 5b, 5c), vorzugsweise an den dazugehörigen Armaturen (6a, 6b, 6c), Mittel zur thermischen Entkopplung des Formwerkzeugs (3) von der Transfereinheit (2) oder Teilen davon und/oder von der Plastifiziereinheit (1) vorgesehen sind.

10. Verfahren nach einem der Ansprüche 1 bis 9, wobei das Ausgangsmaterial (11) als Trockenfeststoff vorliegt und vorzugsweise ein pulver-, granulat-, kugeloder flockenförmiges Ausgangsmaterial ist.

11. Verfahren nach einem der Ansprüche 1 bis 10, wobei das Ausgangsmaterial (11) Prepolymere, insbesondere Oligomere, oder Monomere vermischt mit einem die Polyreaktion auslösenden und/oder beschleunigenden Aktivator, enthält.

12. Verfahren nach einem der Ansprüche 1 bis 11, wobei die aus dem Ausgangsgemisch erzeugte Kunststoffmatrix aus einem thermo- oder duroplastischen Kunststoff besteht.

13. Verfahren nach einem der Ansprüche 1 bis 12, wobei die aus dem reaktiven Ausgangsgemisch erzeugte Kunststoffmatrix aus einem Poly(butylenterephthalat) (PBT) besteht, und das Ausgangsgemisch zyklische Oligomere des PBT (CPBT) vermischt mit einem Katalysator, vorzugsweise einem Zink-Katalysator, enthält.

14. Verfahren nach einem der Ansprüche 1 bis 13, wobei das Ausgangsgemisch (11) Prepolymere, insbesondere Oligomere, oder Monomere vermischt mit einem Aktivator zur Polyreaktion zu einem dem Ausgangsgemisch entsprechenden thermoplastischen Polymer enthält und die Schmelztemperatur des Ausgangsgemischs niedriger ist als die Schmelztemperatur der aus dem Ausgangsgemisch hergestellten thermoplastischen Kunststoffmatrix und die ideale Reaktionstemperatur des Ausgangsgemischs höher ist als die Schmelztemperatur des Ausgangsgemischs und tiefer ist als die Schmelztemperatur der Kunststoffmatrix.

15. Vorrichtung zur Ausführung des Verfahrens nach Anspruch 1, wobei die Vorrichtung Mittel zum Aufbereiten und Mischen des Ausgangsmaterials enthält, und die Mittel über Leitungen (4, 5) mit einem Formwerkzeug (3) zusammenwirken,
**dadurch gekennzeichnet, dass**
die Mittel eine Plastifiziereinheit (1) mit Schneckensystem (10) zur Aufbereitung und Homogenisierung eines fliessfähigen, reaktiven Ausgangsgemischs umfassen, und Mittel zur Energiezufuhr in das Ausgangsmaterials in der Plastifiziereinheit (1) vorgesehen sind.

16. Vorrichtung nach Anspruch 15, wobei die Plastifiziereinheit (1) Teil einer Extrudervorrichung ist.

17. Vorrichtung nach Anspruch 15, wobei die Plastifiziereinheit Teil einer Spritzgiessvorrichung ist.

18. Vorrichtung nach einem der Ansprüche 15 bis 17, wobei die Vorrichtung eine Transfereinheit (2) mit einem Reservoir (14) enthält, und die Plastifiziereinheit (1) über eine oder mehrere Förderleitungen (4) mit dem Reservoir (14) einer Transfereinheit (2) verbunden ist, und das Reservoir (14) über eine oder mehrere Injektionsleitungen (5a, 5b, 5c) mit der Kavität des Formwerkzeug (3) verbunden ist, wobei die Transfereinheit (2) ausserhalb oder innerhalb des Formwerkzeugs (3) angeordnet ist.

19. Vorrichtung nach einem der Ansprüche 15 bis 18, wobei das Formwerkzeug (3) von der Plastifiziereinheit (1) und/oder der Transfereinheit (2) thermisch entkoppelt ist.

20. Vorrichtung nach einem der Ansprüche 15 bis 19, wobei die Transfereinheit oder Teile davon Mittel zur Energiezufuhr, insbesondere zu deren Beheizung, enthalten.

21. Verwendung der Vorrichtung nach Anspruch 15 zur Herstellung von Faserverbundbauteilen mit einer duro- oder thermoplastischen Kunststoffmatrix.
